(19) **Europäisches Patentamt / European Patent Office / Office européen des brevets**

(11) **EP 3 651 541 B1**

(12) **EUROPEAN PATENT SPECIFICATION**

(45) Date of publication and mention of the grant of the patent:
**25.03.2026 Bulletin 2026/13**

(21) Application number: **19217670.9**

(22) Date of filing: **17.10.2018**

(51) International Patent Classification (IPC):
*H04W 76/11* (2018.01)   *H04W 48/18* (2009.01)
*H04W 36/00* (2009.01)

(52) Cooperative Patent Classification (CPC):
**H04W 48/18; H04W 36/0022; H04W 76/11**

(54) **DEVICE AND METHOD OF HANDLING A PROTOCOL DATA UNIT SESSION AND A NETWORK SLICE**

VORRICHTUNG UND VERFAHREN ZUR HANDHABUNG EINER PROTOKOLLDATENEINHEITSSITZUNG UND EIN NETZWERK-SLICE

DISPOSITIF ET PROCÉDÉ DE GESTION D'UNE SESSION D'UNITÉ DE DONNÉES DE PROTOCOLE ET D'UNE TRANCHE DE RÉSEAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.10.2017   US 201762573172 P**
**17.10.2017   US 201762573676 P**

(43) Date of publication of application:
**13.05.2020 Bulletin 2020/20**

(62) Document number(s) of the earlier application(s) in accordance with Art. 76 EPC:
**18200933.2 / 3 474 601**

(73) Proprietor: **HTC Corporation**
**Taoyuan City 330, (TW)**

(72) Inventors:
• **TIWARI, Kundan**
  **Taoyuan City 330, (TW)**
• **WU, Chih-Hsiang**
  **Taoyuan City 330, (TW)**

(74) Representative: **Wimmer, Hubert**
**Wagner & Geyer Partnerschaft mbB**
**Patent- und Rechtsanwälte**
**Gewürzmühlstrasse 5**
**80538 München (DE)**

(56) References cited:
**EP-A1- 3 442 281      EP-A2- 3 416 430**
**WO-A1-2017/175715     CA-A1- 3 019 903**

## Description

Background of the Invention

1. Field of the Invention

The present invention relates to a device and a method used in a wireless communication system, and more particularly, to a device and a method of handling a protocol data unit session and a network slice.

2. Description of the Prior Art

A new radio (NR) system, initiated by the third generation partnership project (3GPP), includes a new radio interface and a new radio network architecture that provides a high data rate, a low latency, packet optimization, and an improved system capacity and an improved coverage.

EP 3 416 430 A2 discloses a communication device for handling mobility from a long-term evolution (LTE) network to a fifth generation (5G) network comprising a storage device storing instructions of transmitting a first LTE Non-Access Stratum (NAS) message to the LTE network; receiving a second LTE NAS message in response to the first LTE NAS message, from the LTE network; and transmitting a message to the 5G network, after determining to communicate with the 5G network instead of the LTE network, wherein the message comprises a slice information, and the slice information is comprised in the first LTE NAS message or in the second LTE NAS message.

CA 3019903 A1 discloses a communication procedure for transmitting and receiving data, suitable for network slicing and DeCOR. A communications provider has one or a plurality of network slices within a core network that it manages, and the network slice comprises one or a plurality of network functions therewithin. On the basis of a request from a terminal device or registration information of the terminal device, the terminal device executes a process to connect to one or a plurality of network slices corresponding to a service or application. Further, the terminal device executes a process to connect to an additional network slice on the basis of authentication results from the network.

Summary of the Invention

The present invention therefore provides a method and related communication device for handling a protocol data unit session and a network slice to solve the abovementioned problem.

The invention is defined by the independent claims. The dependent claims define advantageous embodiments.

A communication device for handling a packet data network (PDN) connection and a network slice comprises at least one storage device; and at least one processing circuit, coupled to the at least one storage device. The at least one storage device stores, and the at least one processing circuit is configured to execute instructions of establishing a PDN connection with a first network; transmitting a Registration Request message of a Registration procedure to a second network, wherein the Registration Request message comprises a protocol data unit (PDU) Session Identifier (ID) identifying the PDN connection; and receiving a Registration Accept message comprising a slice identifier associated to the PDN connection, from the second network.

These and other objectives of the present invention will no doubt become obvious to those of ordinary skill in the art after reading the following detailed description of the preferred embodiment that is illustrated in the various figures and drawings.

Brief Description of the Drawings

Fig. 1 is a schematic diagram of a wireless communication system according to an example of the present invention.
Fig. 2 is a schematic diagram of a communication device according to an example of the present invention.

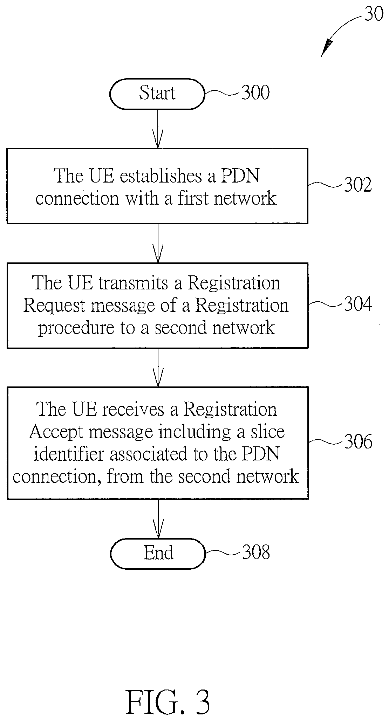

Fig. 3 is a flowchart of a process according to an example of the present invention.

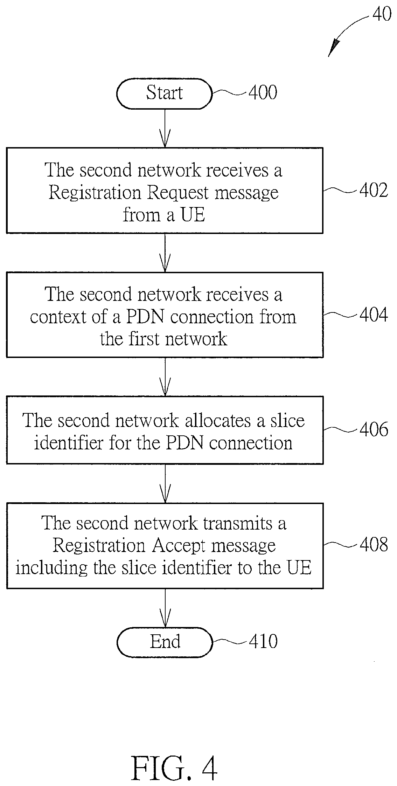

Fig. 4 is a flowchart of a process according to an example of the present invention.

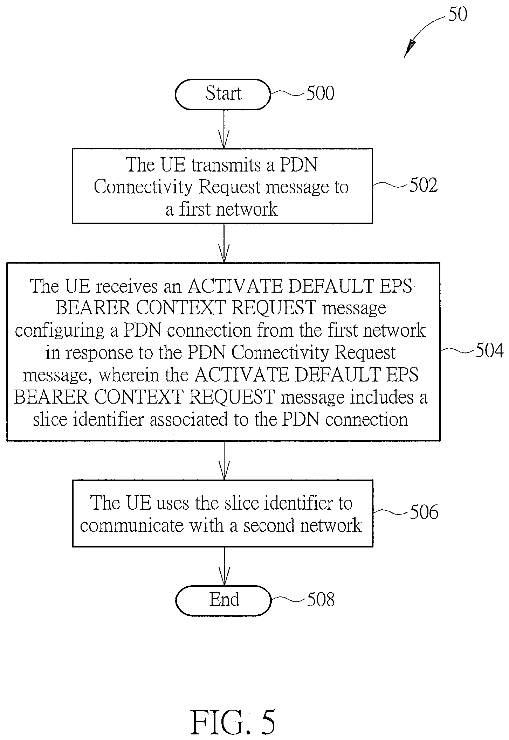

Fig. 5 is a flowchart of a process according to an example of the present invention.

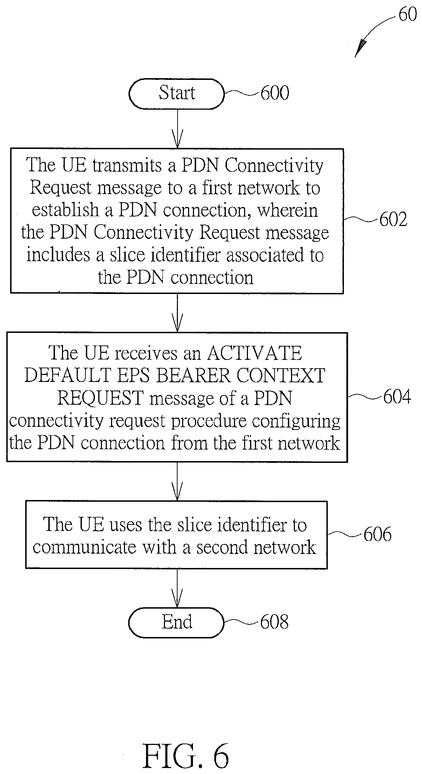

Fig. 6 is a flowchart of a process according to an example of the present invention.

Detailed Description

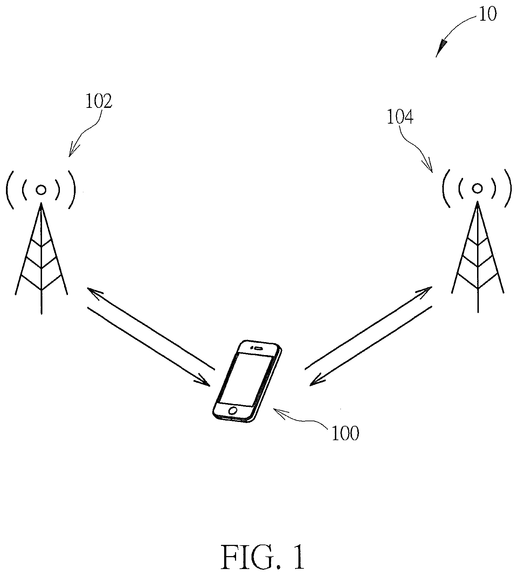

Fig. 1 is a schematic diagram of a wireless communication system 10 according to an example of the present invention. The wireless communication system 10 is briefly composed of a communication device 100, a network 102 and a network 104. In Fig. 1, the communication device 100, the network 102 and the network 104 are simply utilized for illustrating the structure of the wireless communication system 10. Any of the networks 102 and 104 may include a base station (BS). The BS may be an evolved Node-B (eNB), a next generation Node-B (gNB), an enhanced long-term evolution (eLTE) BS, etc.

The communication device 100 may be configured to simultaneously connect to the networks 102 and 104 (e.g., dual connectivity (DC). That is, the communication device 100 in the DC may perform a transmission/reception via both the networks 102 and 104. For example, the communication device 100 may receive packets from the network 102 at a first carrier frequency and the network104 at a second carrier frequency, or the communication device 100 may transmit packets to the network 102 at a first carrier frequency and the network 104 at a second carrier frequency. The first carrier frequency and the second carrier frequency may or may not be overlapped.

The communication device 100 may be a user equipment (UE), a mobile phone, a laptop, a tablet computer, an electronic book, a portable computer system, a vehicle or an airplane. In addition, for an uplink (UL), the communication device 100 is a transmitter and the network(s) 102 and/or 104 is a receiver(s), and for a downlink (DL), the network(s) 102 and/or 104 is a transmitter(s) and the communication device 100 is a receiver.

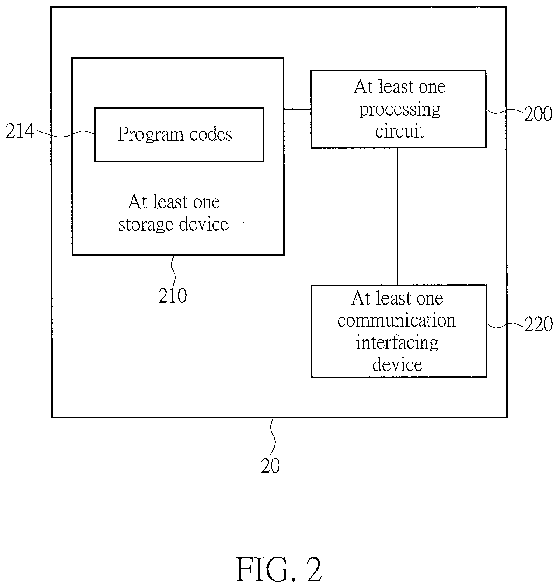

Fig. 2 is a schematic diagram of a communication device 20 according to an example of the present invention. The communication device 20 may be the communication device 100, the network(s) 102 and/or 104 shown in Fig. 1, but is not limited herein. The communication device 20 may include at least one processing circuit 200 such as a microprocessor or Application Specific Integrated Circuit (ASIC), at least one storage device 210 and at least one communication interfacing device 220. The at least one storage device 210 may be any data storage device that may store program codes 214, accessed and executed by the at least one processing circuit 200. Examples of the at least one storage device 210 include but are not limited to a subscriber identity module (SIM), read-only memory (ROM), flash memory, random-access memory (RAM), hard disk, optical data storage device, non-volatile storage device, non-transitory computer-readable medium (e.g., tangible media), etc. The at least one communication interfacing device 220 is preferably at least one transceiver and is used to transmit and receive signals (e.g., data, messages and/or packets) according to processing results of the at least one processing circuit 200. In the following examples, a UE is used for representing the communication device 100 in Fig. 1, to simplify the illustration of the examples.

According to the prior art, when an application of a UE initiates a data transfer, a Network Slice Selection Policy (NSSP) rule maps the application to a network slice and a UE initiates a protocol data unit (PDU) session establishment corresponding to the network slice. The UE associates a PDU session to the network slice, after the PDU session is established. However, after an intersystem change from an evolved packet core (EPC) to a 5G core network (5GC), it is unknown to which network slice the PDU session (or the PDN connection) is mapped.

A process 30 is utilized in a UE, to determine a network slice to which an established PDU session of the UE is associated. The process 30 includes the following steps:

Step 300:   Start.
Step 302:   The UE establishes a PDN connection with a first network (e.g., EPC).
Step 304:   The UE transmits a Registration Request message of a Registration procedure to a second network (e.g., 5GC).
Step 306:   The UE receives a Registration Accept message including a slice identifier associated to the PDN connection, from the second network.
Step 308:   End.

In one example, the UE performs a PDN connectivity procedure with the first network to establish the PDN connection (e.g., as specified in 3GPP TS 24.301). The UE may include a PDU Session Identifier (ID) for identifying the PDN connection or for associating the PDU Session ID to the PDN connection in a PDN CONNECTIVITY REQUEST message of the PDN connectivity procedure transmitted to the first network.

In one example, the UE performs a PDN connectivity procedure with the first network to establish the PDN connection (e.g., as specified in 3GPP TS 24.301). The first network may include a PDU Session ID for identifying the PDN connection in an ACTIVATE DEFAULT EPS BEARER CONTEXT REQUEST message of the PDN connectivity procedure transmitted to the UE.

In one example, a PDU Session ID may be used for identifying the PDN connection. The Registration Request message may or may not include the PDU Session ID identifying the PDN connection.

In one example, the first network transmits a context of the PDN connection to the second network in response to a message transmitted by the second network due to the Registration procedure. The first network may or may not transmit the PDU Session ID to the second network in the context. In one example, the second network determines to keep the PDN connection or to release the PDN connection, and notify the determination in the Registration Accept message to the UE. In one example, the Registration Accept message may include the PDU Session ID for identifying the PDN connection, if the second network determines to keep the PDN connection for the UE.

In one example, when the UE moves from a first cell belonging to the first network to a second cell belonging to the second network, the UE transmits the Registration Request message to the second network via the second cell. The second network may configure a network slice associated to the PDN connection. To do so, the second network may allocate a slice identifier (e.g., Single - Network Slice Selection Assistance Information (S-NSSAI)) associated to the PDN connection. The second network may transmit a Registration Accept message indicating the slice identifier associated to the PDN connection.

The Registration Accept message may include the PDU Session ID.

In one example, the Registration Accept message neither includes the PDU Session ID nor includes the slice identifier. In this case, the UE may perform a PDU Session Establishment procedure with the second network by transmitting a PDU Session Establishment Request message to the second network via the second cell. The UE may receive a PDU Session Establishment Accept message responding to the PDU Session Establishment Request message, from the second network via the second cell.

A process 40 is utilized in the second network in the process 30, to assign a network slice associated to a PDN connection of a UE. The process 40 includes the following steps:

Step 400:     Start.
Step 402:     The second network receives a Registration Request message from a UE.
Step 404:     The second network receives a context of a PDN connection from the first network.
Step 406:     The second network allocates a slice identifier for the PDN connection.
Step 408:     The second network transmits a Registration Accept message including the slice identifier to the UE.
Step 410:     End.

Description for the process 30 may be applied to the process 40, and is not repeated herein. The following examples may be applied to the above processes.

In one example, the second network transmits a UE Configuration Update Command message allocating the slice identifier to the UE, if (e.g., when) the second network does not include the slice identifier in the Registration Accept message.

In one example, to indicate the slice identifier associated to the PDU Session ID associated to the PDN connection, the Registration Accept message or the UE Configuration Update Command message may include an IE including a set of PDU Session ID and the slice identifier as follows:

Set 1 {PDU Session ID X, S-NSSAI Y}, X is an integer (e.g., 1, 2, ...) and Y is an integer (e.g., 1, 2, ...), wherein the S-NSSAI Y may be defined as follows:

```
S-NSSAI 1 = eMBB (enhanced Mobile Broadband)

S-NSSAI 2 = MIoT (massive IoT)

S-NSSAI 3 = URLLC (ultra- reliable low latency communications)
```

A process 50 is utilized in a UE, to determine a network slice to which an established PDU session of the UE is associated. The process 50 includes the following steps:

Step 500:     Start.
Step 502:     The UE transmits a PDN Connectivity Request message to a first network (e.g., EPC).
Step 504:     The UE receives an ACTIVATE DEFAULT evolved packet system (EPS) BEARER CONTEXT REQUEST message configuring a PDN connection from the first network in response to the PDN Connectivity Request message, wherein the ACTIVATE DEFAULT EPS BEARER CONTEXT REQUEST message includes a slice identifier associated to the PDN connection.
Step 506:     The UE uses (e.g., applies) the slice identifier to communicate with a second network (e.g., 5GC).
Step 508:     End.

According to the process 50, the UE associates the PDN connection to the slice identifier. That is, the first network can configure the UE to associate the PDN connection to a slice identified by the slice identifier.

In one example, the UE transmits an ACTIVATE DEFAULT EPS BEARER CONTEXT ACCEPT message to the first network in response to the ACTIVATE DEFAULT EPS BEARER CONTEXT REQUEST message. When the UE moves to the second network from the first network, the UE may transmit a radio resource control (RRC) message to a BS of the second network or a non-access stratum (NAS) message to the second network via the BS. To use the slice identifier configured by the first network, the UE may include the slice identifier in the RRC message or the NAS message. In one example, the RRC message is a RRC request message or a RRC complete message of a RRC connection establishment procedure, a RRC connection resume procedure or a RRC connection reestablishment procedure. In one example, the NAS message is a NAS request message or a NAS complete message of a NAS Registration procedure, or is a NAS request message or a NAS complete message of a NAS Service Request procedure. In one example, the NAS message is a PDU Session Modification Request message or a PDU Session Release Request message.

In one example, the first network (e.g., mobility management entity (MME) of the EPC) determines the slice identifier according to at least one parameter of the PDN connection in the first network. The at least one parameter may include at least one of an Access Point Name (APN) and a PDN type. For example, the first network may include a first slice identifier in the ACTIVATE DEFAULT EPS BEARER CONTEXT REQUEST message, when a first APN and/or a first PDN type is used for the PDN connection. The first network may include a second slice identifier in the ACTIVATE DEFAULT EPS BEARER CONTEXT REQUEST message, when a second APN and/or a second PDN type is used for the PDN connection.

A process 60 is utilized in a UE, to determine a network slice to which an established PDU session of the UE is associated. The process 60 includes the following steps:

Step 600: Start.
Step 602: The UE transmits a PDN Connectivity Request message to a first network (e.g., EPC) to establish a PDN

connection, wherein the PDN Connectivity Request message includes a slice identifier associated to the PDN connection.
Step 604: The UE receives an ACTIVATE DEFAULT EPS BEARER CONTEXT REQUEST message of a PDN connectivity request procedure configuring the PDN connection from the first network.
Step 606: The UE uses (e.g., applies) the slice identifier to communicate with a second network (e.g., 5GC).
Step 608: End.

In one example, the UE determines to activate the PDN connection in a slice identified by the slice identifier, and performs Step 602 in response to the determination. The UE may have the slice identifier in a storage device of the UE, or may receive the slice identifier from the first network or the second network before Step 602.

In one example, the UE transmits an ACTIVATE DEFAULT EPS BEARER CONTEXT ACCEPT message to the first network in response to the ACTIVATE DEFAULT EPS BEARER CONTEXT REQUEST message. When the UE moves from the second network from the first network, the UE may transmit a RRC message to a BS of the second network or a NAS message to the second network via the BS. The UE may include the slice identifier in the RRC message or the NAS message. Examples of the RRC message and the NAS message can be referred to the previous description, and are not narrated herein.

In one example, the UE determines the slice identifier according to at least one parameter of the PDN connection in the first network. The at least one parameter may include at least one of an APN and a PDN type. For example, the UE may include a first slice identifier in the PDN CONNECTIVITY REQUEST message, when a first APN and/or a first PDN type is used for the PDN connection. The UE may include a second slice identifier in the PDN CONNECTIVITY REQUEST message, when a second APN and/or a second PDN type are used for the PDN connection.

Examples of the processes 30 and 40 may be applied to the processes 50 and 60, and are not repeated herein.

In the above processes, the UE may convert, map or transfer the PDN connection to a PDU Session. In this case, the PDN connection may represent the PDU session converted/mapped/transferred from the PDN connection.

It should be noted that although the above examples are illustrated to clarify the related operations of corresponding processes. The examples can be combined and/or modified arbitrarily according to system requirements and/or design considerations.

Those skilled in the art should readily make combinations, modifications and/or alterations on the abovementioned description and examples. The abovementioned description, steps and/or processes including suggested steps can be realized by means that could be hardware, software, firmware (known as a combination of a hardware device and computer instructions and data that reside as read-only software on the hardware device), an electronic system, or combination thereof. An example of the means may be the communication device 20. In the above description, description for the first network may be compiled into the program codes 214 in a first BS, and description for the second network may be compiled into the program codes 214 in a second BS.

To sum up, the present invention provides a method and related communication device for efficiently handling a PDU session and a network slice. Thus, the problem that a communication device does not have a network slice for a PDU session when connecting to another network is solved.

Those skilled in the art will readily observe that numerous modifications and alterations of the device and method may be made while retaining the teachings of the invention. Accordingly, the above disclosure should be construed as limited only by the metes and bounds of the appended claims.

**Claims**

1.  A communication device (100) for handling a packet data network, PDN, connection and a network slice, comprising:

    at least one storage device (210); and
    at least one processing circuit (200), coupled to the at least one storage device (210), wherein the at least one storage device (210) stores, and the at least one processing circuit (200) is configured to execute instructions of:

    transmitting (502) a PDN Connectivity Request message to an evolved packet core, EPC, network (102);
    receiving (504), from the EPC network (102), an ACTIVATE DEFAULT evolved packet system, EPS, BEARER CONTEXT REQUEST message configuring a PDN connection in response to the PDN Connectivity Request message, wherein the ACTIVATE DEFAULT EPS BEARER CONTEXT REQUEST message comprises a slice identifier associated to the PDN connection;
    simultaneously connecting to the EPC network and, using the slice identifier, to a fifth-generation core, 5GC, network; and
    receiving packets from the EPC network (102) at a first carrier frequency and the 5GC network (104) at a second carrier frequency, or transmitting packets to the EPC network (102) at the first carrier frequency and the 5GC network (104) at the second carrier frequency.

2.  The communication device (100) of claim 1, wherein the instructions further comprise:
    transmitting a radio resource control, RRC, message to a base station, BS, of the 5GC network (104) or a non-access stratum, NAS, message to the 5GC network (104) via the BS, when the communication device (100) moves to the 5GC network (104) from the EPC network (102).

3.  A method (500) performed by a communication device (100) for handling a packet data network, PDN, connection and a network slice, comprising:

    transmitting (502) a PDN Connectivity Request message to an evolved packet core, EPC, network (102);
    receiving (504), from the EPC network (102), an ACTIVATE DEFAULT evolved packet system, EPS, BEARER CONTEXT REQUEST message configuring a PDN connection in response to the PDN Connectivity Request message, wherein the ACTIVATE DEFAULT EPS BEARER CONTEXT REQUEST message comprises a slice identifier associated to the PDN connection;
    simultaneously connecting to the EPC network and, using the slice identifier, to a fifth-generation core, 5GC, network; and
    receiving packets from the EPC network (102) at a first carrier frequency and the 5GC network (104) at a second carrier frequency, or transmitting packets to the EPC network (102) at the first carrier frequency and the 5GC network (104) at the second carrier frequency.

4.  The method of claim 3, wherein the method further comprises:
    transmitting a radio resource control, RRC, message to a base station, BS, of the 5GC network (104) or a non-access stratum, NAS, message to the 5GC network (104) via the BS, when the communication device (100) moves to the 5GC network (104) from the EPC network (102).

**Patentansprüche**

1.  Kommunikationsvorrichtung (100) zur Verarbeitung einer Paket-Daten-Netzwerk-, PDN-, Verbindung und einer Netzwerkscheibe bzw. -slice, umfassend:

mindestens eine Speichervorrichtung (210); und

mindestens eine Verarbeitungsschaltung (200), die mit der mindestens einen Speichervorrichtung (210) gekoppelt ist, wobei die mindestens eine Speichervorrichtung (210) die folgenden Anweisungen speichert und die mindestens eine Verarbeitungsschaltung (200) so konfiguriert ist, dass sie die folgenden Anweisungen ausführt:

Senden (502) einer PDN-Konnektivitäts-Anforderungs-Nachricht an ein weiterentwickeltes Paketkern-, EPC-, Netzwerk (102);

Empfangen (504) einer ACTIVATE DEFAULT Evolved Packet System, EPS, BEARER CONTEXT REQUEST-Nachricht vom EPC-Netzwerk (102), die eine PDN-Verbindung als Antwort auf die PDN-Konnektivitäts-Anforderungs-Nachricht konfiguriert, wobei die ACTIVATE DEFAULT EPS BEARER CONTEXT REQUEST-Nachricht eine der PDN-Verbindung zugeordnete Scheiben- oder Slice-Kennung umfasst;

gleichzeitiges Verbinden mit dem EPC-Netzwerk und unter Verwendung der Slice-Kennung mit einem Kernnetzwerk der fünften Generation bzw. 5GC-Netzwerk; und

Empfangen von Paketen vom EPC-Netzwerk (102) auf einer ersten Trägerfrequenz und vom 5GC-Netzwerk (104) auf einer zweiten Trägerfrequenz oder Senden von Paketen an das EPC-Netzwerk (102) auf der ersten Trägerfrequenz und an das 5GC-Netzwerk (104) auf der zweiten Trägerfrequenz.

2. Kommunikationsvorrichtung (100) nach Anspruch 1, wobei die Anweisungen ferner umfassen:
Senden einer Funk-Ressourcen-Steuerungs- ,RRC-, Nachricht an eine Basisstation, BS, des 5GC-Netzwerks (104) oder einer Nicht-Zugriffs-Schicht-, NAS-, Nachricht an das 5GC-Netzwerk (104) über die BS, wenn sich die Kommunikationsvorrichtung (100) vom EPC-Netzwerk (102) zum 5GC-Netzwerk (104) bewegt.

3. Verfahren (500), das von einer Kommunikationsvorrichtung (100) zur Verarbeitung einer Paket-Daten-Netzwerk-, PDN- , Verbindung und einer Netzwerkscheibe bzw. -slice durchgeführt wird, umfassend:

Senden (502) einer PDN-Konnektivitäts-Anforderungs-Nachricht an ein weiterentwickeltes Paketkern-, EPC-, Netzwerk (102);

Empfangen (504) einer ACTIVATE DEFAULT Evolved Packet System, EPS, BEARER CONTEXT REQUEST-Nachricht vom EPC-Netzwerk (102), die eine PDN-Verbindung als Antwort auf die PDN-Konnektivitäts-Anforderungs-Nachricht konfiguriert, wobei die ACTIVATE DEFAULT EPS BEARER CONTEXT REQUEST-Nachricht eine der PDN-Verbindung zugeordnete Scheiben- bzw. Slice-Kennung umfasst;

gleichzeitiges Verbinden mit dem EPC-Netzwerk und unter Verwendung der Scheiben- bzw. Slice-Kennung mit einem Kernnetzwerk der fünften Generation bzw. 5GC-Netzwerk; und

Empfangen von Paketen vom EPC-Netzwerk (102) auf einer ersten Trägerfrequenz und vom 5GC-Netzwerk (104) auf einer zweiten Trägerfrequenz oder Senden von Paketen an das EPC-Netzwerk (102) auf der ersten Trägerfrequenz und an das 5GC-Netzwerk (104) auf der zweiten Trägerfrequenz.

4. Verfahren nach Anspruch 3, wobei das Verfahren ferner umfasst:
Senden einer Funk-Ressourcen-Steuerungs-, RRC-, Nachricht an eine Basisstation, BS, des 5GC-Netzwerks (104) oder einer Nicht-Zugriffs-Schicht-, NAS-, Nachricht an das 5GC-Netzwerk (104) über die BS, wenn sich die Kommunikationsvorrichtung (100) vom EPC-Netzwerk (102) zum 5GC-Netzwerk (104) bewegt.

**Revendications**

1. Dispositif de communication (100) destiné à gérer une connexion à un réseau de données par paquets, PDN, et une tranche de réseau, comprenant :

au moins un dispositif de stockage (210) ; et

au moins un circuit de traitement (200), couplé au au moins un dispositif de stockage (210), dans lequel le au moins un dispositif de stockage (210) stocke, et le au moins un circuit de traitement (200) est configuré pour exécuter les instructions suivantes :

transmettre (502) un message de demande de connectivité PDN à un réseau à cœur de paquets évolué, EPC, (102) ;

recevoir (504), depuis le réseau EPC (102), un message ACTIVATE DEFAULT evolved packet system, EPS, BEARER CONTEXT REQUEST configurant une connexion PDN en réponse au message PDN Connectivity Request, dans lequel le message ACTIVATE DEFAULT EPS BEARER CONTEXT REQUEST comprend un identifiant de tranche associé à la connexion PDN ;

se connecter simultanément au réseau EPC et, à l'aide de l'identifiant de tranche, à un réseau central de cinquième génération, 5GC; et

recevoir des paquets provenant du réseau EPC (102) à une première fréquence porteuse et du réseau 5GC (104) à une deuxième fréquence porteuse, ou transmettre des paquets au réseau EPC (102) à la première fréquence porteuse et au réseau 5GC (104) à la deuxième fréquence porteuse.

2. Le dispositif de communication (100) selon la revendication 1, dans lequel les instructions comprennent en outre :
transmettre un message de contrôle des ressources radio, RRC, à une station de base, BS, du réseau 5GC (104) ou un message de strate non accessible, NAS, au réseau 5GC (104) via la BS, lorsque le dispositif de communication (100) passe du réseau EPC (102) au réseau 5GC (104).

3. Procédé (500) exécuté par un dispositif de communication (100) pour gérer une connexion à un réseau de données par paquets, PDN, et une tranche de réseau, comprenant :

transmettre (502) un message de demande de connectivité PDN à un réseau à cœur de paquets évolué, EPC, (102) ;

recevoir (504), depuis le réseau EPC (102), un message ACTIVATE DEFAULT evolved packet system, EPS, BEARER CONTEXT REQUEST configurant une connexion PDN en réponse au message PDN Connectivity Request, dans lequel le message ACTIVATE DEFAULT EPS BEARER CONTEXT REQUEST comprend un identifiant de tranche associé à la connexion PDN ;

se connecter simultanément au réseau EPC et, à l'aide de l'identifiant de tranche, à un réseau central de cinquième génération, 5GC; et

recevoir des paquets provenant du réseau EPC (102) à une première fréquence porteuse et du réseau 5GC (104) à une deuxième fréquence porteuse, ou transmettre des paquets au réseau EPC (102) à la première fréquence porteuse et au réseau 5GC (104) à la deuxième fréquence porteuse.

4. Procédé selon la revendication 3, dans lequel le procédé comprend en outre :
transmettre un message de contrôle des ressources radio, RRC, à une station de base, BS, du réseau 5GC (104) ou un message de strate non accessible, NAS, au réseau 5GC (104) via la BS, lorsque le dispositif de communication (100) passe du réseau EPC (102) au réseau 5GC (104).

FIG. 1

214 ~ Program codes

At least one
storage device

210

At least one
processing
circuit

~200

At least one
communication
interfacing
device

~220

20

FIG. 2

30

Start ─ 300

The UE establishes a PDN
connection with a first network ── 302

The UE transmits a Registration
Request message of a Registration
procedure to a second network ── 304

The UE receives a Registration
Accept message including a slice
identifier associated to the PDN
connection, from the second network ── 306

End ─ 308

FIG. 3

40

Start ～400

The second network receives a
Registration Request message
from a UE ～402

The second network receives a
context of a PDN connection from
the first network ～404

The second network allocates a slice
identifier for the PDN connection ～406

The second network transmits a
Registration Accept message
including the slice identifier to the UE ～408

End ～410

FIG. 4

50

Start ~500

The UE transmits a PDN
Connectivity Request message to
a first network ~502

The UE receives an ACTIVATE DEFAULT EPS
BEARER CONTEXT REQUEST message
configuring a PDN connection from the first network
in response to the PDN Connectivity Request
message, wherein the ACTIVATE DEFAULT EPS
BEARER CONTEXT REQUEST message includes a
slice identifier associated to the PDN connection ~504

The UE uses the slice identifier to
communicate with a second network ~506

End ~508

FIG. 5

60

Start ～600

The UE transmits a PDN Connectivity
Request message to a first network to
establish a PDN connection, wherein
the PDN Connectivity Request message
includes a slice identifier associated to
the PDN connection ～602

The UE receives an ACTIVATE
DEFAULT EPS BEARER CONTEXT
REQUEST message of a PDN
connectivity request procedure configuring
the PDN connection from the first network ～604

The UE uses the slice identifier to
communicate with a second network ～606

End ～608

# FIG. 6

**EP 3 651 541 B1**

**Patent documents cited in the description**

- EP 3416430 A2
- CA 3019903 A1